# EUROPÄISCHE PATENTSCHRIFT

(11) **EP 2 636 500 B1**
(45) Veröffentlichungstag und Bekanntmachung des Hinweises auf die Patenterteilung: **24.12.2014**
(21) Anmeldenummer: 13157895.7
(22) Anmeldetag: 05.03.2013
(51) Int. Cl.: B29C 31/06, G01F 15/18

(54) **Dosiereinrichtung zur Dosierung fließfähiger Stoffe**
Metering device for metering flowable materials
Dispositif de dosage de matières pouvant s'écouler

(30) Priorität: 05.03.2012 DE 102012101835
(43) Veröffentlichungstag der Anmeldung: 11.09.2013
(73) Patentinhaber: Birnbach, Boguslaw, 64319 Pfungstadt (DE)
(72) Erfinder: Birnbach, Boguslaw, 64319 Pfungstadt (DE)
(74) Vertreter: Katscher Habermann Patentanwälte

(56) Entgegenhaltungen:
- DE-A1- 4 337 877
- DE-A1- 19 820 709

## Beschreibung

Die Erfindung betrifft eine Dosiereinrichtung zur Dosierung fließfähiger Stoffe, mit einer Montageeinrichtung und einer Messeinrichtung, wobei die Dosiereinrichtung mit Hilfe der Montageeinrichtung auf einer die fließfähigen Stoffe weiterverarbeitenden Maschine montierbar ist.

Solche Dosiereinrichtungen werden beispielsweise zur Dosierung von Kunststoffgranulat zur Weiterverarbeitung in einem Extruder oder einer Spritzgussmaschine verwendet. Dabei wird eine vorgebbare Menge eines Kunststoffgranulats über ein steuerbares Ventil der Messeinrichtung zugeführt.

Als Messeinrichtungen werden unter anderem Dosierwaagen eingesetzt. Bei den steuerbaren Ventilen kann es sich beispielsweise um auf der Messeinrichtung bzw. der Dosierwaage angeordnete steuerbare Dosierschieber handeln.

Nachdem das Kunststoffgranulat der Messeinrichtung zugeführt ist, wird beispielsweise ein Gewicht der augenblicklich in der Messeinrichtung vorhandenen Granulatmenge von der Messeinrichtung erfasst. Mit Hilfe des erfassten Gewichts der Granulatmenge kann das steuerbare Ventil so angesteuert werden, dass eine vorgegebene Granulatmenge in der Messeinrichtung dosiert ist, bevor die dosierte Granulatmenge dem Extruder oder der Spritzgussmaschine zugeführt wird.

Dabei ist es auch möglich, dass unterschiedliche Kunststoffgranulate aus verschiedenen Vorratsbehältern über steuerbare Ventile der Messeinrichtung zugeführt werden und die steuerbaren Ventile so mit Hilfe der von der Messeinrichtung erfassten Granulatmenge angesteuert werden, dass dem Extruder eine vorgegebene Menge eines Granulatgemischs zur Weiterverarbeitung zur Verfügung gestellt wird, wobei das Granulatgemisch die verschiedenen Kunststoffgranulate in einem vorgegebenen Mischungsverhältnis enthält.

Üblicherweise wird das Granulatgemisch vor der Weiterverarbeitung in einer mit der Messeinrichtung starr verbundenen Mischvorrichtung vermischt. Die bei dem Mischvorgang auftretenden Bewegungen und Schwingungen der Mischvorrichtung werden dadurch auf die Messeinrichtung übertragen und verfälschen die erzielbaren Messergebnisse.

Die Dosiereinrichtung wird üblicherweise starr mit Hilfe der Montageeinrichtung mit der weiterverarbeitenden Maschine verbunden. Dadurch werden Eigenbewegungen der weiterverarbeitenden Maschine während eines Herstellungsprozesses auf die Messeinrichtung übertragen und beeinträchtigen das Messergebnis. Ebenso beeinflussen auf die Messeinrichtung wirkende Bewegungen und Schwingungen die Messung, die durch die diskontinuierliche Ansteuerung der verschiedenen Ventile bzw. Dosierschieber und durch die Förderung der unterschiedlichen fließfähigen Stoffe hervorgerufen werden.

Unter anderem die vorangehend genannten Störungen wirken auf die Messeinrichtung und verfälschen die Messergebnisse.

Um dennoch ausreichend genaue Messergebnisse erzielen zu können, sind in dem Dosierungsprozess üblicherweise Messzeiten vorgesehen, in denen die augenblicklich in der Messeinrichtung vorhandene Granulatmenge erfasst wird. Dabei wird die Dauer der Messzeiten so bemessen, dass ausreichend Messzeit zur Erfassung einer Vielzahl von Messwerten zur Verfügung steht. Ausgehend von der Vielzahl von Messwerten zu einem einzigen Dosierungsprozess wird beispielsweise durch eine geeignete Mittelwertbildung eine Mengenangabe des augenblicklich abgemessenen fließfähigen Stoffs bestimmt und davon ausgegangen, dass durch die Mittelung über viele einzelne Messwerte die jeweiligen Störungen durch Schwingungen und Vibrationen die angestrebte Dosiergenauigkeit nicht mehr übermäßig herabsetzen. Es hat sich jedoch herausgestellt, dass auch die durch viele Einzelmessungen und eine anschließende softwaretechnische Auswertung gewonnenen Mengenangaben oftmals signifikant von den Vorgaben und den ermittelten Mengenangaben abweichen.

Die Offenlegungsschrift DE 43 37 877 A1 offenbart eine Vorrichtung gemäß dem Oberbegriff des Anspruchs 1.

Die bisherigen Anstrengungen, durch eine verbesserte Auswertung zahlreicher Einzelmessungen die Messgenauigkeit zu verbessern, konnten bislang keine überzeugenden Ergebnisse liefern. Es sind aus der Praxis auch Überlegungen bekannt, die Dosiereinrichtung neben der weiterverarbeitenden Maschine oder auf einem gesonderten Gestell frei tragend über der weiterverarbeitenden Maschine anzuordnen. Der hierfür anfallende konstruktive Aufwand ist jedoch beträchtlich.

Als Aufgabe der Erfindung wird es daher angesehen, die bekannten Dosiereinrichtungen so weiterzuentwickeln, dass mit der Dosiereinrichtung eine genauere Dosierung möglich ist.

Diese Aufgabe wird erfindungsgemäß dadurch gelöst, dass die Dosiereinrichtung mindestens zwei parallel und beabstandet zueinander angeordnete vertikale Stützelemente und ein in einem ersten Endbereich der vertikalen Stützelemente angeordnetes und mit jedem vertikalen Stützelement durch jeweils mindestens ein Gelenk verbundenes Trägerelement aufweist, wobei die Montageeinrichtung in einem dem ersten Endbereich gegenüberliegenden zweiten Endbereich der vertikalen Stützelemente angeordnet und mit jedem vertikalen Stützelement durch jeweils mindestens ein Gelenk verbunden ist, so dass das Trägerelement und die Montageeinrichtung bei einer relativen Auslenkung des Trägerelements und der Montageeinrichtung parallel zueinander verschoben werden. Die Messeinrichtung kann dabei beispielsweise an dem von der Montageeinrichtung entkoppelten Trägerelement angeordnet sein.

Auf die Montageeinrichtung wirkende Eigenbewegungen der weiterverarbeitenden Maschine werden über die Gelenke auf die vertikalen Stützelemente, das Trägerelement und die Messeinrichtung übertragen. Die Gelenke sorgen dabei für eine mechanische Entkopplung der Bewegungen der Montageeinrichtung und der Bewegung der Messeinrichtung. Durch die Masseträgheit des Trägerelements, der vertikalen Stützelemente und der Messeinrichtung werden die von der Montageeinrichtung auf die Messeinrichtung übertragenen Eigenbewegungen der weiterverarbeitenden Maschine gedämpft, so dass die die Messung störenden Einflüsse der weiterverarbeitenden Maschine abgeschwächt werden. Auf diese Weise sind genauere Messergebnisse zu erzielen.

An dem Trägerelement können beispielsweise auch weitere Elemente der Dosieranlage wie steuerbare Ventile oder Vorratsbehälter der verschiedenen fließfähigen Stoffe angeordnet sein, wodurch ein Gewicht der Dosiereinrichtung erhöht und eine Dämpfung der auf die Dosiereinrichtung wirkenden Eigenbewegungen der weiterverarbeitenden Maschine verstärkt wird.

Durch an dem Trägerelement angeordnete steuerbare Ventile oder weitere starr mit dem Trägerelement verbundene Elemente der Dosieranlage können ebenfalls die Messung störende Bewegungen und Schwingungen auf die Messeinrichtung übertragen werden.

Um den Einfluss solcher mit dem Trägerelement verbundener Komponenten der Dosieranlage auf die Messeinrichtung zu verringern und ein möglichst gutes Messergebnis zu erzielen ist erfindungsgemäß vorteilhafterweise vorgesehen, dass die Messeinrichtung durch jeweils mindestens ein Gelenk mit den vertikalen Stützelementen verbunden ist.

Auf diese Weise wird die Messeinrichtung weitestgehend von der Montageeinrichtung und von dem Trägerelement und damit von der weiterverarbeitenden Maschine und weiteren, über das Trägerelement mit der Dosiereinrichtung starr verbundenen Elementen mechanisch entkoppelt. Auf die Dosiereinrichtung wirkende Bewegungen und Schwingungen wirken daher lediglich stark gedämpft auf die Messeinrichtung, so dass eine vergleichsweise präzise Messung erreicht wird.

Es ist ebenfalls möglich, die Messeinrichtung über Kraftmessdosen oder andere geeignete Messvorrichtungen mit dem Trägerelement oder mit den vertikalen Stützelementen zu verbinden, um mit der Messeinrichtung der Dosiereinrichtung eine kontinuierliche Loss-in-Weight-Messung und damit einhergehend eine kontinuierliche Messung und Dosierung zu ermöglichen. Aus der Praxis sind handelsübliche Kraftmessdosen bekannt, die zum Abstützen der Messeinrichtung an dem Trägerelement oder an den vertikalen Stützelementen verwendet werden können. Geeignete Kraftmessdosen ermöglichen eine ausreichend präzise Gewichtsmessung, um auch kleinste Mengenanteile kontinuierlich und zuverlässig dosieren zu können.

Zweckmäßigerweise ist die Messeinrichtung zwischen dem Trägerelement und der Montageeinrichtung angeordnet. Auf diese Weise wird durch eine derartige Anordnung der Messeinrichtung ein besonders raumsparender Aufbau der Dosiereinrichtung erreicht.

Um die Dosiereinrichtung weiter zu stabilisieren und eine zusätzliche Dämpfungswirkung zu erzielen ist erfindungsgemäß vorgesehen, dass zwei vertikale Stützelemente durch ein Stabilisierungselement mit mindestens einem Federelement federnd verbunden sind. Auf diese Weise kann einfach beispielsweise eine maximale Auslenkung des Trägerelements vorgegeben werden. Zudem kann durch die federnde Verbindung der vertikalen Stützelemente eine zusätzliche schwingungsdämpfende Wirkung und somit eine weitere Verbesserung der erzielbaren Messergebnisse erreicht werden.

Bei dem Stabilisierungselement kann es sich beispielsweise um eine Strebe handeln, die einseitig über eine Spiralfederanordnung mit einem ersten vertikalen Stützelement verbunden ist und starr mit einem zweiten Stützelement, so dass bei einer Auslenkung des Trägerelements die Spiralfederanordnung mit einem Drehmoment belastet wird. Die maximal mögliche Auslenkung des Trägerelements ist dann durch einen maximalen Biegeweg der Spiralfederanordnung bestimmt.

Es ist aber auch möglich, die Strebe und das zweite vertikale Stützelement mit einem entsprechenden Federelement mit Drehmomentbelastung zu verbinden.

Vorteilhafterweise ist erfindungsgemäß vorgesehen, dass das Stabilisierungselement jeweils mit zwei beabstandet zueinander in gegenüberliegenden Randbereichen des Stabilisierungselements angeordneten Federelementen mit den vertikalen Stützelementen verbunden ist. Bei dem Stabilisierungselement kann es sich beispielsweise um ein Steuerungsgehäuse einer Dosiereinrichtungssteuerung handeln. Bei der Verwendung eines im Wesentlichen quaderförmigen Steuerungsgehäuses sind die Federelemente zweckmäßigerweise in Eckbereichen des Steuerungsgehäuses angeordnet, wobei jeweils vertikal in einer gemeinsamen Ebene liegende Federelemente mit einem vertikalen Stützelement verbunden sind. Die horizontal beabstandeten Federelemente wirken einer Verkippung des Steuerungsgehäuses bei einem Verschwenken der vertikalen Stützelemente entgegen und erzeugen eine der Auslenkung der vertikalen Stützelemente entgegenwirkende Rückstellkraft. Bei einer parallelen Verschiebung der Montageeinrichtung und des Trägerelements wird auf diese Weise auch das Stabilisierungselement im Wesentlichen parallel verschoben, allerdings auf Grund des geringeren Abstands zu der Montageeinrichtung, bzw. zu dem Trägerelement um einen entsprechend geringeren Betrag. Bei einer Anordnung des Stabilisierungselements zwischen zwei vertikalen Stützelementen werden die dabei eingesetzten Federelemente auf Zug bzw. Druck belastet. Auf diese Weise kann auch einfach eine maximale Auslenkung der Dosiereinrichtung vorgegeben werden, die durch einen Federweg der Federelemente oder einen Anschlag des Stabilisierungselements an den vertikalen Stützelementen bestimmt ist.

Es ist aber auch möglich und zweckmäßigerweise vorgesehen, dass das Stabilisierungselement beabstandet zu den vertikalen Stützelementen angeordnet ist, wobei das Stabilisierungselement außerhalb eines durch die vertikalen Stützelemente abgrenzbaren Raums angeordnet ist.

Als Stabilisierungselement können neben weiteren Komponenten der Dosieranlage wie beispielsweise des Steuerungsgehäuses zur Aufnahme der Steuerungselektronik der Dosiereinrichtung auch speziell angepasste Bauteile verwendet werden, die über geeignete Federelemente mit den vertikalen Stützelementen verbunden werden.

Eine besonders gute Dämpfungs- und Stabilisierungswirkung kann dadurch erreicht werden, dass es sich bei den Federelementen um gummielastische Verbindungselemente handelt. Gummielastische Verbindungselemente weisen eine hohe Belastbarkeit und eine lange Produktlebensdauer auf und können sowohl auf Zug, Druck und Biegung als auch mit einem Drehmoment belastet werden. Die gummielastischen Verbindungselemente können beispielsweise zylinderförmig oder quaderförmig ausgestaltet sein. Solche Verbindungselemente sind kostengünstig herstellbar und einfach für eine Vielzahl unterschiedlicher Dosiereinrichtungen verwendbar. Zudem weisen solche gummielastische Verbindungselemente besonders vorteilhafte Schwingungsdämpfungseigenschaften auf.

Die Eigenbewegungen der weiterverarbeitenden Maschine weisen häufig eine Hauptbewegungsrichtung auf. Um die Konstruktion der Dosiereinrichtung weiter zu vereinfachen und die auf die Dosiereinrichtung übertragenen Eigenbewegungen der weiterverarbeitenden Maschine in der Hauptbewegungsrichtung zu dämpfen ist erfindungsgemäß vorgesehen, dass die vertikalen Stützelemente jeweils mit ausschließlich um eine horizontale Achse schwenkbaren Gelenken mit dem Trägerelement und der Montageeinrichtung verbunden sind. Auf diese Weise ist eine Parallelverschiebung des Trägerelements und der Montageeinrichtung nur auf einer vorgegebenen Trajektorie möglich. Eine solche Anordnung wird auch als Parallellenker bezeichnet. Wird die Dosiereinrichtung nun so auf der weiterverarbeitenden Maschine montiert, dass eine horizontale Komponente der Trajektorie in die Hauptbewegungsrichtung der weiterverarbeitenden Maschine zeigt, werden hauptsächlich die auf die Dosiereinrichtung in der Hauptbewegungsrichtung wirkenden Eigenbewegungen der weiterverarbeitenden Maschine gedämpft.

Eine solche Zwangsführung kann erfindungsgemäß auch dadurch erreicht werden, dass mindestens zwei vertikale Stützelemente jeweils mit mindestens zwei beabstandeten Gelenken mit dem Trägerelement und jeweils mit mindestens zwei beabstandeten Gelenken mit der Montageeinrichtung verbunden sind. Bei den beiden vertikalen Stützelementen kann es sich beispielsweise um jeweils zwei starr miteinander verbundene Einzelstützen oder um zwei Stützwände handeln. Durch die starre Verbindung der mindestens vier an einem vertikalen Stützelement angeordneten Gelenke ist die Bewegungsmöglichkeit des Parallellenkers auf eine Trajektorie eingeschränkt.

Eine weitere Verbesserung der Dämpfungswirkung der erfindungsgemäßen Dosiereinrichtung kann auch dadurch erreicht werden, dass neben den zur Verbindung der Stabilisierungselemente eingesetzten Federelemente auch die zwischen der Montageeinrichtung, dem Trägerelement und den vertikalen Stützelementen angeordneten Gelenke federnde oder dämpfende oder auch federnde und dämpfende Eigenschaften aufweisen.

Daher ist erfindungsgemäß vorgesehen, dass die vertikalen Stützelemente, die Montageeinrichtung und das Trägerelement durch Federgelenke miteinander verbunden sind. Durch die schwingungsdämpfende Wirkung der zusätzlichen Federn können von der weiterverarbeitenden Maschine über die Montageeinrichtung auf die Dosiereinrichtung übertragene Schwingungen wirkungsvoll gedämpft werden.

Bei einer besonders vorteilhaften Ausgestaltung der erfindungsgemäßen Dosiereinrichtung ist vorteilhafterweise vorgesehen, dass die vertikalen Stützelemente und die Messeinrichtung durch Federgelenke miteinander verbunden sind. Durch die Federgelenke werden auftretende und auf die Dosiereinrichtung wirkende Schwingungen zusätzlich gedämpft, so dass die Messergebnisse weiter verbessert werden können.

Eine besonders gute Dämpfungswirkung kann dadurch erreicht werden, dass es sich bei den Federgelenken um gummielastische Verbindungselemente handelt.

Auf die Messeinrichtung einwirkende Bewegungen können dadurch weiter gedämpft werden, dass mindestens ein Dämpfungselement an den vertikalen Stützelementen und/oder den Messelementen und/oder der Messeinrichtung und/oder dem Trägerelement angeordnet ist. Es ist auch möglich, dass die Messeinrichtung über zusätzliche Gelenke mit dem Trägerelement verbunden ist. Auf diese Weise können auch von weiteren mit der Dosiereinrichtung verbundenen Komponenten der Dosieranlage wie beispielsweise der steuerbaren Ventile auf die Messeinrichtung übertragene und störend wirkende Schwingungen und Bewegungen gedämpft werden.

Vorteilhafterweise handelt es sich bei der Messeinrichtung um eine Gewichtsmesseinrichtung.

Um die Messergebnisse weiter zu verbessern ist erfindungsgemäß vorgesehen, dass die Messeinrichtung in einem Gehäuse angeordnet ist, wobei das Gehäuse mit den vertikalen Stützelementen durch Gelenke verbunden ist. Auf diese Weise können weitere die Messung störende Umwelteinflüsse von der Messeinrichtung ferngehalten werden. Die mechanische Entkopplung der Messeinrichtung und der vertikalen Stützelemente wird dabei durch die gelenkige Verbindung des Gehäuses mit den vertikalen Stützelementen erreicht. Das Gehäuse kann auch über Federgelenke oder gummielastische Verbindungselemente mit den vertikalen Stützelementen verbunden sein.

Die Dosiereinrichtung kann einfach dadurch erweitert werden, dass in dem Gehäuse eine Mischeinrichtung angeordnet ist. Mit Hilfe der Mischeinrichtung kann eine gute Durchmischung unterschiedlicher fließfähiger Stoffe erreicht werden.

Erfindungsgemäß ist vorteilhafterweise vorgesehen, dass die Messeinrichtung und das Gehäuse durch ein schwingungsdämpfendes Entkopplungselement miteinander verbunden sind. Bei dem Entkopplungselement kann es sich beispielsweise um Gelenke oder Federgelenke oder gummielastische Verbindungselemente handeln. Auf diese Weise kann die Messeinrichtung auch von störenden und auf das Gehäuse Wirkenden durch die Mischeinrichtung hervorgerufenen Schwingungen entkoppelt werden und ein weitestgehend störungsfreies und besonders exaktes Messergebnis erzielt werden.

Um die Messeinrichtung einfach warten zu können ist erfindungsgemäß vorgesehen, dass an dem Gehäuse eine durchsichtige Wartungstür angeordnet ist. Durch die durchsichtige Wartungstür kann der Dosiervorgang zudem überwacht werden.

Der Dosiervorgang kann erfindungsgemäß dadurch einfacher überwacht werden, dass in dem Gehäuse eine Beleuchtungseinrichtung angeordnet ist. Diese Beleuchtungseinrichtung sollte auf die innerhalb des Gehäuses auftretenden Belastungen beispielsweise gegen auf die Beleuchtungseinrichtung auftreffendes Kunststoffgranulat abgestimmt sein. Zweckmäßigerweise wird als Beleuchtungseinrichtung eine Leuchtdiodenanordnung eingesetzt. Durch die geringe Leistungsaufnahme von Leuchtdioden kann eine solche Leuchtdiodenanordnung auch in explosionsgefährdeten Bereichen eingesetzt werden.

Zweckmäßigerweise ist die Leuchtdiodenanordnung innerhalb eines durchscheinenden Schutzgehäuses angeordnet und dadurch zusätzlich gegen die innerhalb des Gehäuses auftretenden Belastungen geschützt. Die Beleuchtungseinrichtung ist in vorteilhafter Weise so ausgestaltet, dass die Messeinrichtung und gegebenenfalls eine daran anschließende Mischeinrichtung in ausreichender Weise ausgeleuchtet werden, um eine rasche optische Kontrolle des Messvorgangs und des Mischungsvorgangs zu ermöglichen.

Die erfindungsgemäße Beleuchtungseinrichtung könnte natürlich auch bei anderen bzw. herkömmlichen Dosiereinrichtungen verwendet werden. Ein üblicherweise vorhandenes Gehäuse müsste dazu lediglich mit einem Sichtfenster und einer in dem Gehäuse angeordneten Beleuchtungseinrichtung ausgestattet werden.

Weitere vorteilhafte Ausgestaltungen der erfindungsgemäßen Dosiereinrichtung werden anhand eines in der Zeichnung dargestellten und im Folgenden näher erläuterten Ausführungsbeispiels vorgestellt.

Es zeigt:
Fig. 1a eine schematisch dargestellte Ansicht einer Dosiereinrichtung,
Fig. 1b die in Fig. 1a dargestellte Dosiereinrichtung aus einer anderen Perspektive,
Fig. 2a eine schematisch dargestellte Vorderansicht einer anderen Dosiereinrichtung,
Fig. 2b eine schematische dargestellte Schnittansicht der in Fig. 2a dargestellten Dosiereinrichtung, wobei die Dosiereinrichtung zwei vertikale Stützelemente aufweist,
Fig. 3a eine schematisch dargestellte Vorderansicht einer alternativ ausgestalteten Dosiereinrichtung,
Fig. 3b eine schematisch dargestellte Schnittansicht der in Fig. 3a dargestellten Dosiereinrichtung mit vier vertikalen Stützelementen.

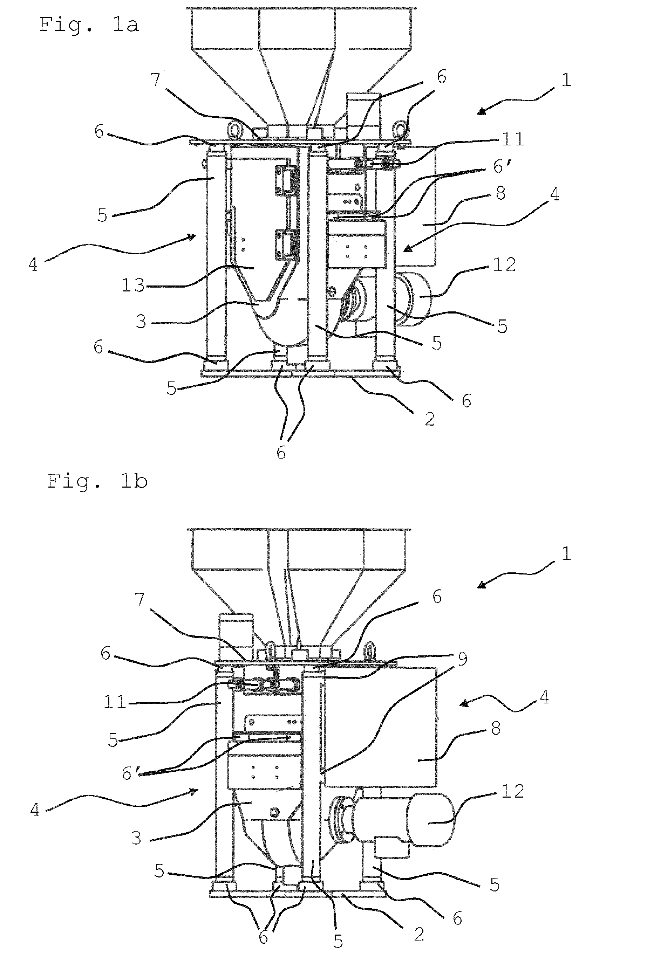

Fig. 1a und Fig. 1b zeigen schematisch dargestellte verschiedene Ansichten einer Dosiereinrichtung 1 mit einer Montageeinrichtung 2 und einer in einem Gehäuse 3 angeordneten Messeinrichtung. Die Dosiereinrichtung 1 weist zwei vertikale Stützelemente 4 auf. Die vertikalen Stützelemente 4 bestehen aus jeweils zwei starr miteinander verbundenen Stützen 5. Die vertikalen Stützen 5 sind mit gummielastischen Verbindungselementen 6 mit der Montageeinrichtung 2 und einem Trägerelement 7 gelenkig verbunden. Durch die Verwendung von jeweils vier gummielastischen Verbindungselementen 7 je vertikalem Stützelement 4 wird eine Zwangsführung der Dosiereinrichtung 1 erreicht.

Die vertikalen Stützelemente 4 sind durch ein Stabilisierungselement 8 über gummielastische Verbindungselemente 9 miteinander verbunden.

An dem Trägerelement 7 sind zudem Vorratsbehälter 10 angeordnet, in denen die fließfähigen Stoffe gelagert und über steuerbare Ventile 11 der Dosiereinrichtung bereitgestellt werden. An Stelle der steuerbaren Ventile 11 können auch druckluftgesteuerte Dosierschieber verwendet werden.

In dem Gehäuse 3 ist eine Mischeinrichtung angeordnet, die über einen Motor 12 angetrieben wird. Bei dem Stabilisierungselement 8 handelt es sich um ein Steuerungsgehäuse, in dem die Steuerung der Dosiereinrichtung untergebracht ist.

Das Gehäuse 3 ist über gummielastische Verbindungselemente 6' mit den vertikalen Stützelementen 4 verbunden.

An Stelle der gummielastischen Verbindungselemente 6' können auch geeignete Kraftmessdosen verwendet werden, über die das Gehäuse 3 mit waagrechten Auflageflächen an den vertikalen Stützelementen 4 abgestützt wird. Die Kraftmessdosen ermöglichen eine kontinuierliche und ausreichend präzise Bestimmung des Gewichts des Gehäuses 3 und der darin bereits zudosierten Mengenanteile der einzelnen fließfähigen Stoffe. Über eine Differenzbildung können der zeitliche Verlauf und eine Loss-In-Weight-Bestimmung für die aus den Vorratsbehältern 10 in das Gehäuse 3 überführten und vermischten fließfähigen Stoffe durchgeführt werden.

Damit wird eine kontinuierliche Regelung der über die Dosiereinrichtung 1 zusammengemischten fließfähigen Stoffe ermöglicht, die einem nachfolgenden Arbeitsschritt beispielsweise in einer Extrusionsvorrichtung zugeführt werden.

Das Gehäuse 3 weist zudem eine durchsichtige Wartungstür 13 auf, durch die der Dosiervorgang überwacht und die Messeinrichtung sowie die Mischeinrichtung gewartet werden kann.

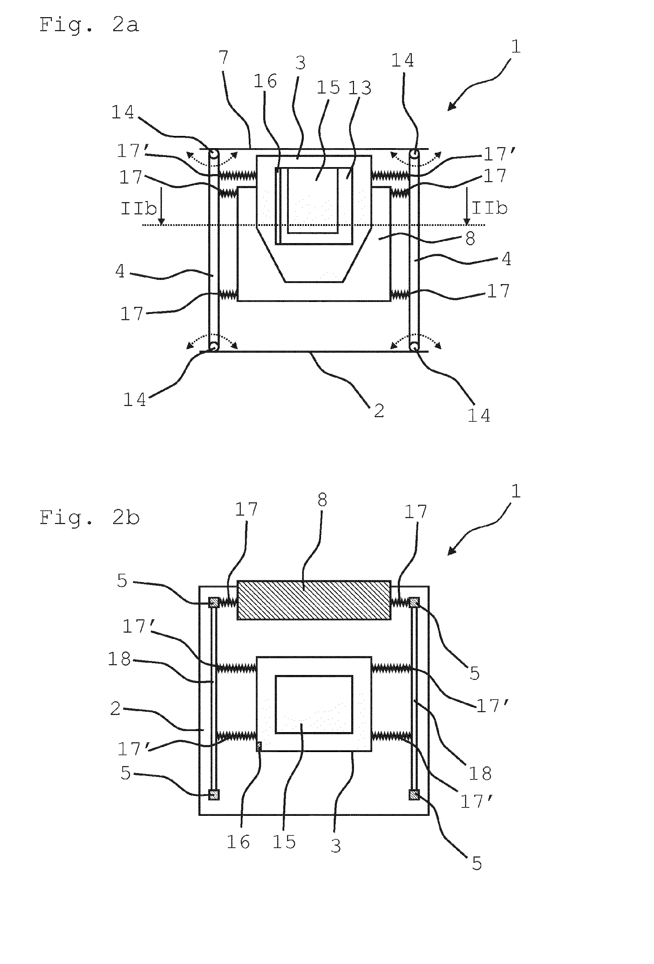

Fig. 2a zeigt eine vereinfachte, schematische Darstellung einer Dosiereinrichtung 1 mit zwei vertikalen Stützelementen 4, die über Gelenke 14 mit einer Montageeinrichtung 2 und einem Trägerelement 7 verbunden sind.

Innerhalb eines Gehäuses 3 sind eine Messeinrichtung 15 und eine Mischeinrichtung vorgesehen. Zu Überwachungs- und Wartungszwecken ist in dem Gehäuse 3 eine durchsichtige Wartungstür 13 angeordnet. Innerhalb des Gehäuses 3 ist zudem eine LED-Beleuchtungseinrichtung 16 vorgesehen. Mit Hilfe der Beleuchtungseinrichtung 16 ist eine einfachere Überwachung der Dosiervorgänge möglich.

Die vertikalen Stützelemente 4 sind über Federelemente 17 mit einer Stabilisierungsvorrichtung 8 verbunden. Das Gehäuse 3 ist ebenfalls über Federelemente 17' mit den vertikalen Stützelementen 4 verbunden. Falls eine Loss-In-Weight-Regelung und damit einhergehend eine kontinuierliche Gewichtsbestimmung gewünscht wird, können statt der Federelemente 17' Kraftmessdosen zur Verbindung und Abstützung des Gehäuses 3 an den vertikalen Stützelementen 4 vorgesehen sein. Die Kraftmessdosen bewirken ebenfalls eine merkliche Entkopplung und Dämpfung des Gehäuses 3 an den vertikalen Stützelementen 4.

In Fig. 2b ist schematisch eine Schnittansicht der in Fig. 2a dargestellten Dosiereinrichtung 1 längs der Schnittlinie IIb-IIb dargestellt.

Die beiden vertikalen Stützelemente 4 bestehen aus jeweils zwei vertikalen Stützen 5, die durch Kopplungselemente 18 steif miteinander verbunden sind. Durch diese steife Verbindung wird eine Zwangsführung der Dosiereinrichtung 1 erreicht, so dass im Wesentlichen Schwingungen ausgeglichen werden, die sich in Richtung einer Zwangsführungsrichtung der Dosiereinrichtung 1 auswirken.

Die Stabilisierungsvorrichtung 8 ist zwischen zwei vertikalen Stützen 5 angeordnet, so dass eine maximale Auslenkung der Dosiereinrichtung 1 durch einen Anschlag der Stabilisierungsvorrichtung 8 mit den vertikalen Stützen 5 vorgegeben ist.

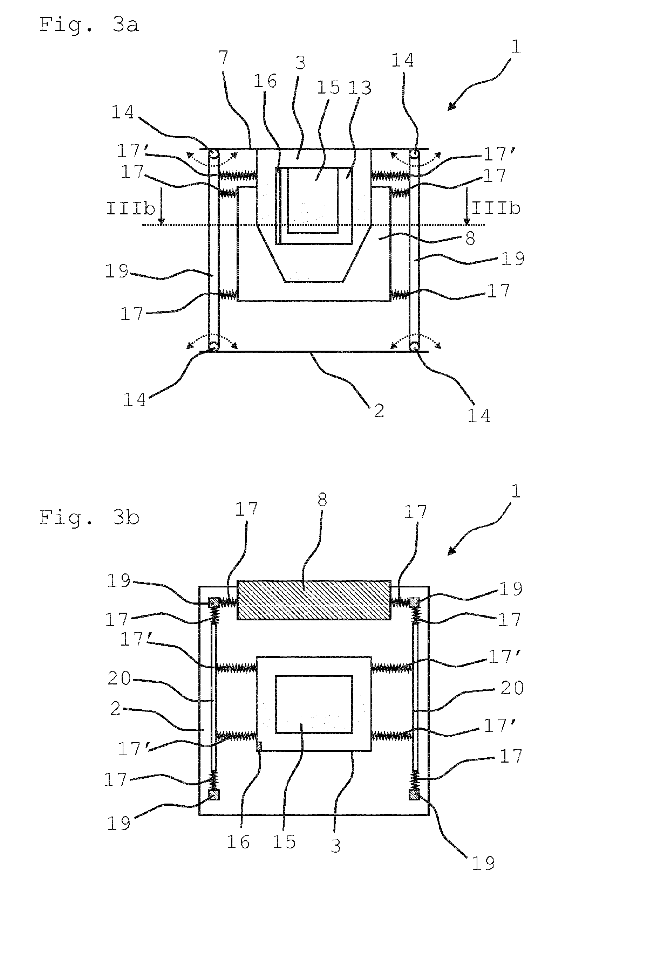

Fig. 3a zeigt schematisch eine alternative Ausgestaltung einer Dosiereinrichtung 1. Aus der in Fig. 3b schematisch dargestellten Schnittansicht der in Fig. 3a dargestellten Dosiereinrichtung 1 ist ersichtlich, dass die Dosiereinrichtung 1 vier vertikale Stützelemente 19 aufweist, die jeweils gelenkig mit der Montageeinrichtung 2 und dem Trägerelement 7 verbunden sind.

Zudem weist die in den Figuren 3a und 3b dargestellte Dosiereinrichtung 1 zwei Stabilisierungsvorrichtungen 8 und 20 auf, um die in beliebige Richtungen auslenkbare Dosiereinrichtung 1 zu stabilisieren und maximale Auslenkungen vorzugeben. Bei der Stabilisierungsvorrichtung 8 handelt es sich um ein Steuerungsgehäuse der Dosiereinrichtung 1, während die Stabilisierungsvorrichtung 20 speziell zur Stabilisierung der Dosiereinrichtung 1 vorgesehen und an den vertikalen Stützelementen 19 über Federelemente 17 angeordnet ist.

Da die in den Figuren 3a und 3b dargestellte Dosiereinrichtung 1 keine Zwangsführung aufweist, können mit Hilfe dieser Dosiereinrichtung 1 Schwingungen und Vibrationen gedämpft werden, die sich in beliebigen Richtungen auf die Dosiereinrichtung 1 auswirken bzw. auf die Dosiereinrichtung 1 einwirken.

## Patentansprüche

1. Dosiereinrichtung (1) zur Dosierung fließfähiger Stoffe, mit einer Montageeinrichtung (2) und einer Messeinrichtung (15), wobei die Dosiereinrichtung (1) mit Hilfe der Montageeinrichtung (2) auf einer die fließfähigen Stoffe weiterverarbeitenden Maschine montierbar ist, **dadurch gekennzeichnet, dass** die Dosiereinrichtung (1) mindestens zwei parallel und beabstandet zueinander angeordnete vertikale Stützelemente (4, 19) und ein in einem ersten Endbereich der vertikalen Stützelemente (4, 19) angeordnetes und mit jedem vertikalen Stützelement (4, 19) durch jeweils mindestens ein Gelenk (14) verbundenes Trägerelement (7) aufweist, wobei die Montageeinrichtung (2) in einem dem ersten Endbereich gegenüberliegenden zweiten Endbereich der vertikalen Stützelemente (4, 19) angeordnet und mit jedem vertikalen Stützelement (4, 19) durch jeweils mindestens ein Gelenk (14) verbunden ist, so dass das Trägerelement (7) und die Montageeinrichtung (2) bei einer relativen Auslenkung des Trägerelements (7) und der Montageeinrichtung (2) parallel zueinander verschoben werden.

2. Dosiereinrichtung (1) gemäß Anspruch 1, **dadurch gekennzeichnet, dass** die Messeinrichtung (15) über jeweils mindestens ein Gelenk mit den vertikalen Stützelementen (4, 19) verbunden ist.

3. Dosiereinrichtung (1) gemäß Anspruch 1, **dadurch gekennzeichnet, dass** die Messeinrichtung (15) über Kraftmessdosen oder andere geeignete Messvorrichtungen mit dem Trägerelement (7) oder mit den vertikalen Stützelementen (4, 19) verbunden ist.

4. Dosiereinrichtung (1) gemäß einem der voranstehenden Ansprüche, **dadurch gekennzeichnet, dass** zwei vertikale Stützelemente (4, 19) durch ein Stabilisierungselement (8, 20) mit mindestens einem Federelement (17) federnd verbunden sind.

5. Dosiereinrichtung (1) gemäß Anspruch 4, **dadurch gekennzeichnet, dass** das Stabilisierungselement (8, 20) jeweils mit zwei beabstandet zueinander in gegenüberliegenden Randbereichen des Stabilisierungselements (8, 20) angeordneten Federelementen (17) mit den vertikalen Stützelementen (4, 19) verbunden ist.

6. Dosiereinrichtung (1) gemäß Anspruch 4 oder 5, **dadurch gekennzeichnet, dass** es sich bei den Federelementen (17) um gummielastische Verbindungselemente (6) handelt.

7. Dosiereinrichtung (1) gemäß einem der voranstehenden Ansprüche, **dadurch gekennzeichnet, dass** die vertikalen Stützelemente (4, 19) jeweils mit ausschließlich um eine horizontale Achse schwenkbaren Gelenken (14) mit dem Trägerelement (7) und der Montageeinrichtung (2) verbunden sind.

8. Dosiereinrichtung (1) gemäß einem der voranstehenden Ansprüche, **dadurch gekennzeichnet, dass** mindestens zwei vertikale Stützelemente (4, 19) jeweils mit mindestens zwei beabstandeten Gelenken (14) mit dem Trägerelement (7) und jeweils mit mindestens zwei beabstandeten Gelenken (14) mit der Montageeinrichtung (2) verbunden sind.

9. Dosiereinrichtung (1) gemäß einem der voranstehenden Ansprüche, **dadurch gekennzeichnet, dass** die vertikalen Stützelemente (4, 19), die Montageeinrichtung (2) und das Trägerelement (7) durch Federgelenke miteinander verbunden sind.

10. Dosiereinrichtung (1) gemäß einem der voranstehenden Ansprüche, **dadurch gekennzeichnet, dass** die vertikalen Stützelemente (4, 19) und die Messeinrichtung (15) durch Federgelenke (17') miteinander verbunden sind.

11. Dosiereinrichtung (1) gemäß Anspruch 8 oder Anspruch 9, **dadurch gekennzeichnet, dass** es sich bei den Federgelenken um gummielastische Verbindungselemente (6, 6') handelt.

12. Dosiereinrichtung (1) gemäß einem der voranstehenden Ansprüche, **dadurch gekennzeichnet, dass** mindestens ein Dämpfungselement an den vertikalen Stützelementen (4) und/oder der Messeinrichtung (15) und/oder dem Trägerelement (7) angeordnet ist.

13. Dosiereinrichtung (1) gemäß einem der voranstehenden Ansprüche, **dadurch gekennzeichnet, dass** es sich bei der Messeinrichtung (15) um eine Gewichtsmesseinrichtung handelt.

14. Dosiereinrichtung (1) gemäß einem der voranstehenden Ansprüche, **dadurch gekennzeichnet, dass** die Messeinrichtung (15) in einem Gehäuse (3) angeordnet ist, wobei das Gehäuse (3) mit den vertikalen Stützelementen (4) durch Gelenke verbunden ist.

15. Dosiereinrichtung (1) gemäß Anspruch 14, **dadurch gekennzeichnet, dass** in dem Gehäuse (3) eine Mischeinrichtung angeordnet ist.

16. Dosiereinrichtung (1) gemäß Anspruch 14 oder Anspruch 15, **dadurch gekennzeichnet, dass** die Messeinrichtung (15) und das Gehäuse (3) durch ein schwingungsdämpfendes Enkopplungselement miteinander verbunden sind.

17. Dosiereinrichtung (1) gemäß einem der Ansprüche 14 bis 16, **dadurch gekennzeichnet, dass** an dem Gehäuse (3) eine durchsichtige Wartungstür (13) angeordnet ist.

18. Dosiereinrichtung (1) gemäß Anspruch 17, **dadurch gekennzeichnet, dass** in dem Gehäuse (3) eine Beleuchtungseinrichtung (16) angeordnet ist.

## Claims

1. Metering device (1) for metering flowable materials, with a mounting device (2) and a measuring device (15), the metering device (1) being mountable with the aid of the mounting device (2) on a machine which further processes the flowable materials, **characterized in that** the metering device (1) has at least two vertical supporting elements (4, 19), arranged parallel and so as to be spaced apart from one another, and a carrier element (7) which is arranged in a first end region of the vertical supporting elements (4, 19) and which is connected to each vertical supporting element (4, 19) in each case by means of at least one joint (14), the mounting device (2) being arranged in a second end region, lying opposite the first end region, of the vertical supporting elements (4, 19) and being connected to each vertical supporting element (4, 19) in each case by means of at least one joint (14), so that, in the event of a relative deflection of the carrier element (7) and of the mounting device (2), the carrier element (7) and the mounting device (2) are displaced parallel to one another.

2. Metering device (1) according to Claim 1, **characterized in that** the measuring device (15) is connected to the vertical supporting elements (4, 19) in each case via at least one joint.

3. Metering device (1) according to Claim 1, **characterized in that** the measuring device (15) is connected to the carrier element (7) or to the vertical supporting elements (4, 19) via load cells or other suitable measuring instruments.

4. Metering device (1) according to one of the preceding claims, **characterized in that** two vertical supporting elements (4, 19) are connected resiliently to at least one spring element (17) by means of a stabilizing element (8, 20).

5. Metering device (1) according to Claim 4, **characterized in that** the stabilizing element (8, 20) is connected to the vertical supporting elements (4, 19) in each case by means of two spring elements (17) arranged, spaced apart from one another, in opposite marginal regions of the stabilizing element (8, 20).

6. Metering device (1) according to Claim 4 or 5, **characterized in that** the spring elements (17) are elastomeric connecting elements (6).

7. Metering device (1) according to one of the preceding claims, **characterized in that** the vertical supporting elements (4, 19) are connected to the carrier element (7) and the mounting device (2) in each case by means of joints (14) pivotable solely about a horizontal axis.

8. Metering device (1) according to one of the preceding claims, **characterized in that** at least two vertical supporting elements (4, 19) are connected to the carrier element (7) in each case by means of at least two spaced-apart joints (14) and to the mounting device (2) in each case by means of at least two spaced-0apart joints (14).

9. Metering device (1) according to one of the preceding claims, **characterized in that** the vertical supporting elements (4, 19), the mounting device (2) and the carrier element (7) are connected to one another by means of spring joints.

10. Metering device (1) according to one of the preceding claims, **characterized in that** the vertical supporting elements (4, 19) and the measuring device (15) are connected to one another by means of spring joints (17').

11. Metering device (1) according to Claim 8 or Claim 9, **characterized in that** the spring joints are elastomeric connecting elements (6, 6').

12. Metering device (1) according to one of the preceding claims, **characterized in that** at least one damping element is arranged on the vertical supporting elements (4) and/or the measuring device (15) and/or the carrier element (7).

13. Metering device (1) according to one of the preceding claims, **characterized in that** the measuring device (15) is a weight-measuring device.

14. Metering device (1) according to one of the preceding claims, **characterized in that** the measuring device (15) is arranged in a housing (3), the housing (3) being connected to the vertical supporting elements (4) by means of joints.

15. Metering device (1) according to Claim 14, **characterized in that** a mixing device is arranged in the housing (3).

16. Metering device (1) according to Claim 14 or Claim 15, **characterized in that** the measuring device (15) and the housing (3) are connected to one another by means of a vibration-damping decoupling element.

17. Metering device (1) according to one of Claims 14 to 16, **characterized in that** a transparent servicing door (13) is arranged on the housing (3).

18. Metering device (1) according to Claim 17, **characterized in that** a lighting device (16) is arranged in the housing (3).

## Revendications

1. Dispositif de dosage (1) pour le dosage de matières pouvant s'écouler, comprenant un dispositif de montage (2) et un dispositif de mesure (15), le dispositif de dosage (1) pouvant, à l'aide du dispositif de montage (2), être monté sur une machine de traitement ultérieur des matières pouvant s'écouler, **caractérisé en ce que** le dispositif de dosage (1) comprend au moins deux éléments de support verticaux (4, 19) disposés parallèlement et à distance l'un de l'autre et un élément porteur (7) disposé dans une première région d'extrémité des éléments de support verticaux (4, 19) et relié à chaque élément de support vertical (4, 19) au moyen d'au moins une articulation (14) respective, le dispositif de montage (2) étant disposé dans une deuxième région d'extrémité, opposée à la première région d'extrémité, des éléments de support verticaux (4, 19) et étant relié à chaque élément de support vertical (4, 19) au moyen d'au moins une articulation (14) respective, de telle sorte que, lors d'une déviation relative de l'élément porteur (7) et du dispositif de montage (2), l'élément porteur (7) et le dispositif de montage (2) soient déplacés parallèlement l'un à l'autre.

2. Dispositif de dosage (1) selon la revendication 1, **caractérisé en ce que** le dispositif de mesure (15) est relié aux éléments de support verticaux (4, 19) par le biais d'au moins une articulation respective.

3. Dispositif de dosage (1) selon la revendication 1, **caractérisé en ce que** le dispositif de mesure (15) est relié à l'élément porteur (7) ou aux éléments de support verticaux (4, 19) par le biais de capteurs dynamométriques ou d'autres dispositifs de mesure appropriés.

4. Dispositif de dosage (1) selon l'une quelconque des revendications précédentes, **caractérisé en ce que** deux éléments de support verticaux (4, 19) sont reliés de manière élastique à au moins un élément ressort (17) au moyen d'un élément de stabilisation (8, 20).

5. Dispositif de dosage (1) selon la revendication 4, **caractérisé en ce que** l'élément de stabilisation (8, 20) est relié aux éléments de support verticaux (4, 19) par deux éléments ressort (17) respectifs disposés à distance l'un de l'autre dans des régions de bord opposées de l'élément de stabilisation (8, 20).

6. Dispositif de dosage (1) selon la revendication 4 ou 5, **caractérisé en ce que** les éléments ressort (17) sont des éléments de liaison (6) présentant l'élasticité du caoutchouc.

7. Dispositif de dosage (1) selon l'une quelconque des revendications précédentes, **caractérisé en ce que** les éléments de support verticaux (4, 19) sont reliés à l'élément porteur (7) et au dispositif de montage (2) à chaque fois exclusivement par des articulations (14) pouvant pivoter autour d'un axe horizontal.

8. Dispositif de dosage (1) selon l'une quelconque des revendications précédentes, **caractérisé en ce qu'**au moins deux éléments de support verticaux (4, 19) sont reliés à l'élément porteur (7) par au moins deux articulations espacées (14) respectives et sont reliés au dispositif de montage (2) par au moins deux articulations espacées (14) respectives.

9. Dispositif de dosage (1) selon l'une quelconque des revendications précédentes, **caractérisé en ce que** les éléments de support verticaux (4, 19), le dispositif de montage (2) et l'élément porteur (7) sont reliés les uns aux autres par des articulations élastiques.

10. Dispositif de dosage (1) selon l'une quelconque des revendications précédentes, **caractérisé en ce que** les éléments de support verticaux (4, 19) et le dispositif de mesure (15) sont reliés les uns aux autres au moyen d'articulations élastiques (17').

11. Dispositif de dosage (1) selon la revendication 8 ou la revendication 9, **caractérisé en ce que** les articulations élastiques sont des éléments de liaison (6, 6') présentant l'élasticité du caoutchouc.

12. Dispositif de dosage (1) selon l'une quelconque des revendications précédentes, **caractérisé en ce qu'**au moins un élément d'amortissement est disposé sur les éléments de support verticaux (4) et/ou sur le dispositif de mesure (15) et/ou sur l'élément porteur (7) .

13. Dispositif de dosage (1) selon l'une quelconque des revendications précédentes, **caractérisé en ce que** le dispositif de mesure (15) est un dispositif de mesure de poids.

14. Dispositif de dosage (1) selon l'une quelconque des revendications précédentes, **caractérisé en ce que** le dispositif de mesure (15) est disposé dans un boîtier (3), le boîtier (3) étant relié aux éléments de support verticaux (4) au moyen d'articulations.

15. Dispositif de dosage (1) selon la revendication 14, **caractérisé en ce qu'**un dispositif de mélange est disposé dans le boîtier (3).

16. Dispositif de dosage (1) selon la revendication 14 ou la revendication 15, **caractérisé en ce que** le dispositif de mesure (15) et le boîtier (3) sont reliés l'un à l'autre au moyen d'un élément de découplage amortissant les vibrations.

17. Dispositif de dosage (1) selon l'une quelconque des revendications 14 à 16, **caractérisé en ce qu'**une porte d'entretien (13) transparente est disposée sur le boîtier (3).

18. Dispositif de dosage (1) selon la revendication 17, **caractérisé en ce qu'**un dispositif d'éclairage (16) est disposé dans le boîtier (3).
